# EUROPÄISCHE PATENTANMELDUNG

(11) **EP 1 878 871 A1**
(43) Veröffentlichungstag der Anmeldung: **16.01.2008**
(21) Anmeldenummer: 06014624.8
(22) Anmeldetag: 13.07.2006
(51) Int. Cl.: F01D 5/10, F01D 5/02, F16F 15/32, F16F 15/36, G01M 1/36

(54) **Reduktion von Biegeschwingungsamplituden von Turbinenrotoren**

(71) Anmelder: SIEMENS AKTIENGESELLSCHAFT, 80333 München (DE)
(72) Erfinder: Adams, Heinz, 66740 Saarlouis (DE); Lüneburg, Bernd Dr., 45481 Mülheim an der Ruhr (DE)

(57) **Zusammenfassung**

Die Erfindung betrifft eine Strömungsmaschine, die eine Rotorwelle (1) aufweist, welche Rotorblätter (2) trägt. Der Rotorwelle (1) ist zumindest ein mit einem Medium (21) befüllbarer Hohlraum (3; 11, 12, 13, 14, 16, 17, 18, 19, 22, 23, 24) derart zugeordnet, dass Unwuchten der Rotorwelle (1) in ihrem Drehbetrieb reduziert sind.

## Beschreibung

Die Erfindung betrifft eine Strömungsmaschine, die eine Rotorwelle aufweist, welche Rotorblätter trägt.

Die DE 103 58 292 B3 offenbart eine Bahnbehandlungswalze mit wenigstens einem Hohlraum. Der Hohlraum ist wenigstens teilweise mit einer Mischung aus einer Flüssigkeit und wenigstens einem in der Flüssigkeit nicht löslichen Mischungspartner gefüllt, den Feststoffpartikel oder eine andere Flüssigkeit bilden oder bildet.

Die in der DE 103 58 292 B3 offenbarte Bahnbehandlungswalze in der Ausgestaltung als Kalanderwalze hat sich in der Praxis dahingehend bewährt, dass das Schwingungsverhalten von Walzen für die Behandlung bahnförmiger Medien verbessert wird.

Die Eingangs genannten Strömungsmaschinen können beispielsweise als Dampfturbinen oder Gasturbinen ausgeführt sein. Die Fertigung und die Montage von Turbinenrotoren bzw. deren Strangkombinationen mit Generatoren und Hilfsaggregaten hat aber immer eine verbleibende Restunwucht zur Folge (unvermeidbare Unvollkommenheit). So sind z. B. Rundlaufabweichungen, Fertigungsgenauigkeiten, Setzerscheinungen an Schaufeln und Schrumpfsitzen sowie Ausricht- und Teilungsgenauigkeiten der Kupplungen maßgebend für die verbleibende Restunwucht bzw. für das Biegeschwingungsverhalten von Rotoren. Diese Restunwucht hat bei dem Drehbetrieb der Rotorwelle nachteiligerweise immer eine Biegeschwingung zur Folge. Die Auswirkungen dieser Restunwuchten bei dem Drehbetrieb einer Turbine auf die Biegeschwingungen sind wiederum abhängig von der Drehzahl sowie den rotordynamischen Eigenschaften des Turbinenstrangs. Hierzu gehört neben der konstruktiven Ausführung des Turbinenstrangs (Massen- und Steifigkeitsverteilung, Lage der Eigenfrequenzen) und dem Lagerungskonzept (Anzahl, Art und Ort der Lager, usw.) auch die konstruktive Ausführung der Abstützungen. Neben diesen rotordynamischen Standardeinflussfaktoren sind im Turbinenbau weitere Einflussfaktoren wie z. B. thermische, Druck- und Verformungseinflüsse auf die Biegeschwingungsamplituden bekannt.

Werden zu große Biegeschwingungsamplituden erreicht, kann der Betrieb dieser Turbinen/Strangkombinationen eingeschränkt sein, zu Schäden führen (z. B. an den Gleitlagerungen) bzw. ein bestimmungsgemäßer Betrieb ist nicht möglich. Daher müssen in der Regel schwingungsreduzierende Maßnahmen getroffen werden bzw. schwingungsrelevante Kriterien bereits bei der Konstruktion beachtet werden, um die Höhe der auftretenden Biegeschwingungen zu begrenzen.

Um die betrieblichen Biegeschwingungsamplituden von Turbinenläufern zu begrenzen bzw. zu minimieren, ist es bekannt, dies mittels Vorgaben an die Fertigungsgenauigkeit bzw. Vorgaben zur Montagegenauigkeit und über konstruktive Vorgaben (Limitierung des Lagerabstands) zwecks Abstimmung der Biegeeigenfrequenzen des rotierenden Systems zu erreichen. Weiter werden Wuchtungen durchgeführt, die in der Vormontage als auch in der Endmontage bzw. während des Betriebs (Werks- und Kraftwerkswuchtungen) durchgeführt werden. Bekannt ist aber auch, die betrieblichen Biegeschwingungsamplituden über die Gestaltung der Lagerung bzw. des Lagerungskonzeptes zu minimieren.

Der Erfindung liegt die Aufgabe zugrunde, eine Strömungsmaschine, insbesondere eine Rotorwelle mit einfachen Mitteln dahingehend zu verbessern, dass die Biegeschwingungsamplituden reduziert werden.

Erfindungsgemäß wird die Aufgabe dadurch gelöst, dass der Rotorwelle zumindest ein mit einem Medium befüllbarer Hohlraum derart zugeordnet ist, dass Unwuchten der Rotorwelle in ihrem Drehbetrieb reduziert sind.

Günstig im Sinne der Erfindung ist, wenn der zumindest eine Hohlraum stirnseitig in die Welle eingebracht ist.

Die Strömungsmaschine in einer beispielhaften Ausgestaltung als Dampfturbine kann einen Hochdruckteil, einen Mitteldruckteil und einen Niederdruckteil aufweisen, die nacheinander geschaltet sind. Im Hochdruckteil der Strömungsmaschine ist eine herrschende Dampftemperatur erheblich höher als im Niederdruckteil. Hierbei nimmt die Temperatur des Mediums bzw. des Dampfes von einem Einströmbereich in Richtung zu einem Ausströmbereich der Strömungsmaschine bzw. deren jeweiligen Hochdruck-, Mitteldruck und Niederdruckteilturbinen ab.

Günstig im Sinne der Erfindung ist vorgesehen, dass der zumindest eine Hohlraum in einem thermisch günstigen Bereich der Rotorwelle angeordnet ist. Dies hängt unter anderem mit dem Medium zusammen, welches in den Hohlraum eingefüllt wird, worauf weiter unten näher eingegangen wird.

Da in dem Niederdruckteil erheblich niedrigere Temperaturen herrschen als in dem Hochdruckteil der Strömungsmaschine kann der zumindest eine Hohlraum in dem Niederdruckteil in Axialrichtung der Rotorwelle gesehen durchgängig in diese eingebracht sein. In dem Hochdruckteil bzw. im Mitteldruckteil der Strömungsmaschine ist es dagegen zweckmäßig, wenn der zumindest eine Hohlraum nicht durch die gesamte Rotorwelle, also auch durch den Einströmbereich der Rotorwelle geführt ist, sondern in Axialrichtung der Rotorwelle gesehen unterbrochen ist und bevorzugt an jeweiligen Stirnseitenbereichen der Rotorwelle eingebracht ist.

Günstigerweise ist hierbei vorgesehen, dass der zumindest eine Hohlraum in Umfangsrichtung der Rotorwelle gesehen durchgängig in diese eingebracht ist, so dass quasi ein Ringkanal gebildet ist, der sich bevorzugt konzentrisch um eine Drehachse der Rotorwelle herum erstreckt. Möglich ist selbstverständlich auch, dass der zumindest eine Hohlraum in Umfangsrichtung der Welle gesehen unterbrochen in diese eingebracht ist, so dass quasi mehrere in Umfangsrichtung gesehen zueinander beabstandete Hohlräume gebildet sind. Selbstverständlich können die Hohlräume bezogen auf die Drehachse der Rotorwelle aber auch zueinander beabstandet sein.

In einer weiter bevorzugten Ausgestaltung der Erfindung ist es günstig, dass der zumindest eine Hohlraum in einer mit der Welle verbindbaren Komponente eingebracht ist. Die Komponente kann auch als Wuchtkomponente bezeichnet werden, welche als separates Bauteil in geeigneter Weise mit der Rotorwelle verbindbar ist. Hierzu kann die Komponente als separates Wuchtelement mit einer Mantelfläche der Rotorwelle oder an ihrer Stirnseite mit dieser verbunden werden. Als geeignete Verbindungen können beispielsweise Verbindungen über eine Schlitzklemmung, Schraubverbindungen oder ein Aufschrumpfen auf die Mantelfläche vorgesehen sein, so dass ein Schrumpfsitz gebildet ist, wobei eine Verbindung mit der Stirnseite bevorzugt kraftformschlüssig insbesondere über eine Schraubverbindung erreichbar ist.

Günstigerweise ist vorgesehen, dass die Komponente als Ringelement ausgeführt ist, wobei das Ringelement einstückig oder mehrstückig aus Schalenelementen gebildet sein kann. Insbesondere die mehrstückige Ausgestaltung des Ringelementes mit mehreren Schalenelementen, vorzugsweise mit zwei Halbschalen ist dahingehend vorteilhaft, als das Ringelement mit ihrem vorgegebenen Innendurchmesser nicht über die unterschiedlichen Rotorwellenstufen geführt werden muss, sondern an der gewünschten Position aufgesetzt wird, wobei die beiden Halbschalen bzw. die mehreren Schalenelemente miteinander verbunden werden und hinreichend fest bzw. drehsicher mit der Mantelfläche der Rotorwelle verbunden werden.

Zweckmäßig im Sinne der Erfindung ist, wenn die Komponente als Hohlraum einen Ringkanal aufweist, der in Umfangsrichtung des Ringelementes gesehen durchgängig eingebracht ist, wobei die Komponente natürlich auch mehrere in ihrer Umfangsrichtung gesehen beabstandete Hohlräume aufweisen kann.

In bevorzugter Ausgestaltung ist das Medium von breiiger Konsistenz, wobei das Medium ein Gemisch aus einem Feststoff und einer Flüssigkeit ist. Bevorzugterweise ist der Feststoff ein Quarzsand, wobei die Flüssigkeit vorzugsweise ein Öl ist. Möglich Gemische von Feststoff und Flüssigkeit sind in der DE 100 46 868 C2 genannt, die diesbezüglich in Bezug genommen wird.

Der Quarzsand bzw. der Feststoff weist dabei eine Korngröße in einem bevorzugten Bereich zwischen 0,05 und 0,5 mm auf, wobei bevorzugt gebrochene Körner verwendet werden.

Mittels des zumindest einen ganz oder teilweise befüllten Hohlraums wird die Reduzierung von Biegeschwingungsamplituden der Rotorwelle in ihrem Drehbetrieb reduziert. Durch Befüllen eines bzw. mehrerer geteilter Hohlräume der Rotorwelle bzw. der Rotoren der Strangkombinationen an einer oder mehreren unterschiedlichen axialen Positionen im Strang mit einer Mischung breiiger Konsistenz aus einer Flüssigkeit und einem körnigen Feststoff werden die Schwingungsamplituden sowohl bei Durchfahren der kritischen Drehzahlen als auch bei Nenndrehfrequenz reduziert.

Vorteilhafterweise ist der zumindest eine Hohlraum bzw. die mehreren Hohlräume an thermisch günstigen Orten angeordnet, so dass aufgrund der thermischen Einwirkungen keine flüchtigen Bestandteile aus der Flüssigkeit entweichen können. Insbesondere der Verwendung eines Öls als Flüssigkeit liegt die Erkenntnis zugrunde, dass ein Gleiten der bevorzugt gebrochenen bzw. abgerundeten Körner erreicht wird.

Durch die jeweils angepasste erfindungsgemäße Anordnung des einen bzw. der mehreren Hohlräume mit dem darin eingefüllten Medium bzw. dem Feststoff-Flüssigkeits-Gemisch breiiger Konsistenz wird eine Dämpfung durch die Energieaufnahme durch das Gemisch mit anschließender Dissipation erreicht.

Überraschenderweise bewirkt das Medium als Gemisch aus der Flüssigkeit und dem körnigen Feststoff eine Wuchtwirkung, wobei Phasenverschiebungseffekte von Anregung und System sowie eine Tilgerwirkung erreichbar ist.

Mittels einer Variation unterschiedlicher Befüllungsarten (Gemischbildung, Druckbefüllung, Blaseneinschluss, Evakuierung, Befüllmenge usw.) und des Ortes der Befüllung im Turbinenstrang kann dieser Wirkmechanismus weiter optimiert werden. Durch die Überlagerung dieser Wirkmechanismen wird ein schwingungsreduzierender Effekt auf die Biegeschwingungen erreicht.

Die erfindungsgemäße Lösung zur Reduzierung der Biegeschwingungen insbesondere im Drehbetrieb der Rotorwelle ist äußerst einfach und sehr kostengünstig. Insbesondere wird eine Reduktion der Rotorauslenkungen (Amplituden) im Betrieb und beim Durchfahren von kritischen Bereichen erreicht, wobei vorteilhafterweise Schwingungsgrenzwerte auch bei hohen Anforderungen eingehalten werden. Weiter ist vorteilhaft, dass keine Wellenstillstände zum Wuchten erforderlich sind, wobei der Arbeitsgang Wuchten bei der Fertigung unter Umständen entfallen kann. Weiter weist die verbesserte Rotorwelle eine geringere Sensibilität gegen Wuchtveränderungen (weniger betriebliche Wuchtungen) auf. Als Folge kann die Turbine bzw. die Rotorwelle länger und dünner gebaut werden, was eine erhebliche Kostenreduktion und Wirkungsgraderhöhung zur Folge hat.

Weitere vorteilhafte Ausgestaltungen sind in den Unteransprüchen und der folgenden Figurenbeschreibung offenbart.
Es zeigen:
- Fig. 1: eine perspektivische Ansicht einer Rotorwelle mit einer zugeordneten Komponente,
- Fig. 2: die Komponente aus Fig. 2 mit zu Fig. 1 unterschiedlich ausgeführten Hohlräumen,
- Fig. 3: die Komponente aus Fig. 1 mit unterschiedlich ausgeführten Hohlraum in einem Querschnitt gesehen,
- Fig. 4: eine Rotorwelle in einem Querschnitt mit einer Komponente mit zu Fig. 1 unterschiedlich ausgeführtem Hohlraum,
- Fig: 5: eine Rotorwelle in einem Querschnitt mit einer Komponente mit zu Fig. 4 unterschiedlich ausgeführtem Hohlraum,
- Fig. 6: einen Querschnitt aus einem Hochdruckturbinenläufer, und
- Fig. 7: einen Querschnitt aus einem Niederdruckturbinenläufer.

In den unterschiedlichen Figuren sind gleiche Teile stets mit denselben Bezugszeichen versehen, so dass diese in der Regel auch nur einmal beschrieben werden.

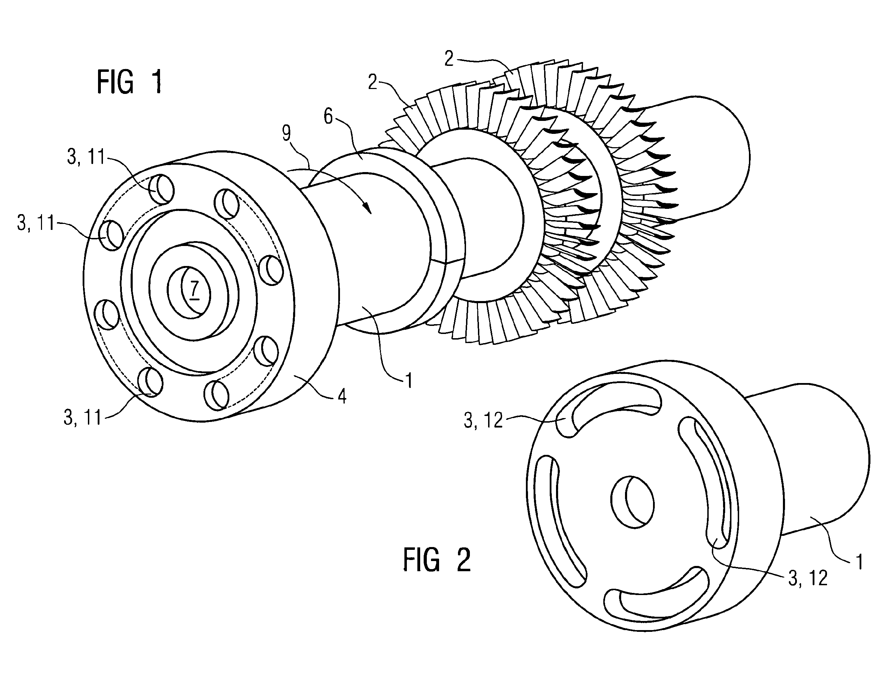

Fig. 1 zeigt einen Ausschnitt aus einer Strömungsmaschine in der Ausgestaltung als Dampfturbine, die eine Rotorwelle 1 aufweist, welche Rotorblätter 2 trägt, die auch als Laufschaufeln bezeichnet werden können. Der Rotorwelle 1 ist zumindest ein mit einem Medium 21 befüllbarer Hohlraum 3 derart zugeordnet, dass Unwuchten der Rotorwelle 1 in ihrem Drehbetrieb reduziert sind.

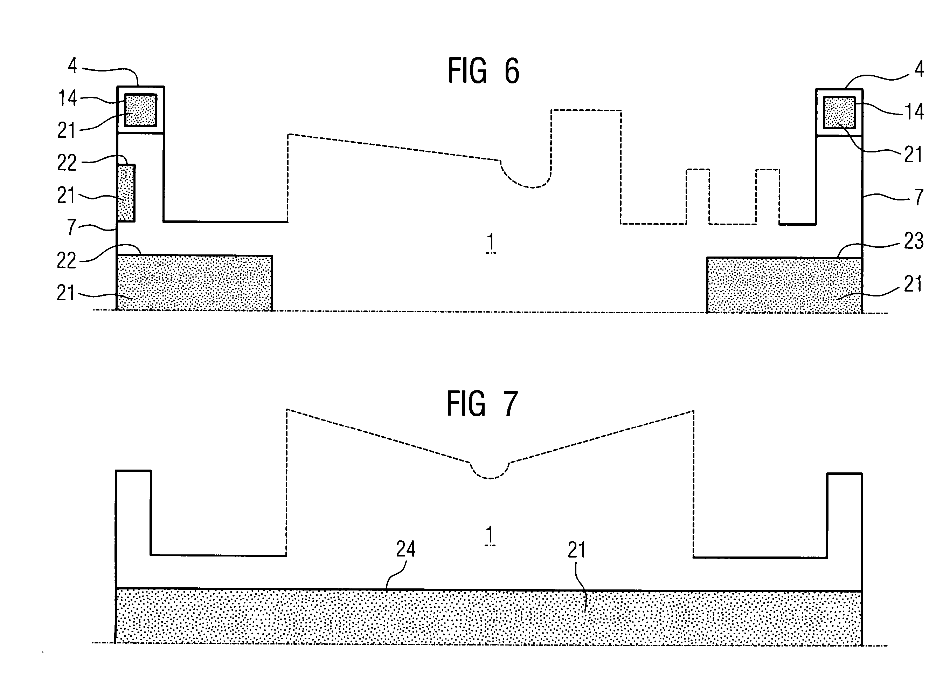

In dem in den Figuren 1 bis 6 dargestellten Ausführungsbeispiel ist die Rotorwelle 1 Bestandteil einer Hochdruckturbine der Strömungsmaschine. In Figur 7 dagegen ist beispielhaft eine Rotorwelle 1 einer Niederdruckturbine dargestellt.

Bei dem in Figur 1 dargestellten Ausführungsbeispiel sind der Rotorwelle 1 separate Komponenten zugeordnet, die als separates Ringelement 4 bzw. 6 ausgeführt sind.

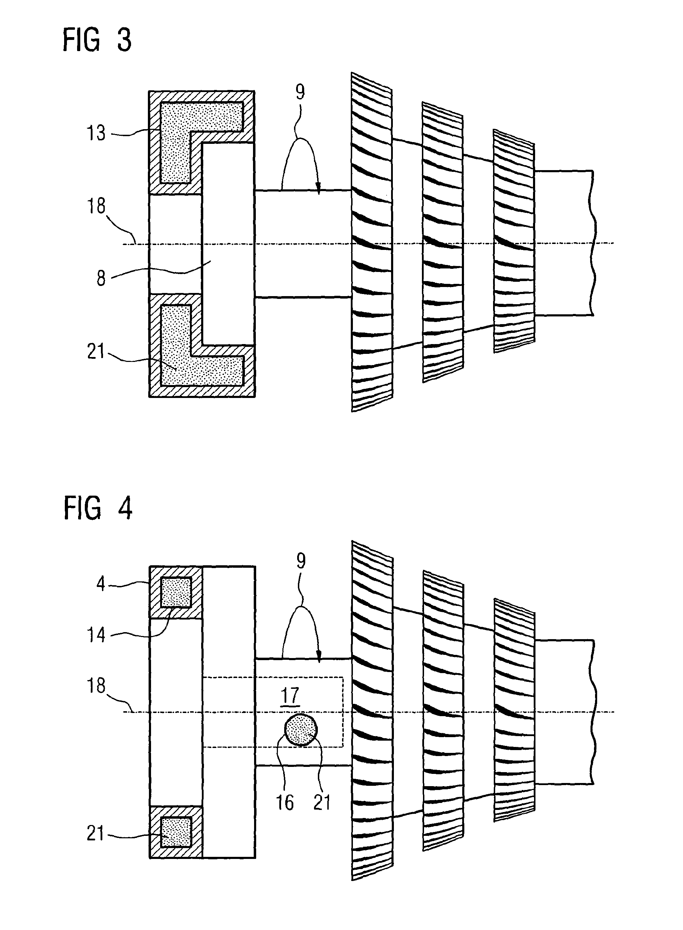

Das Ringelement 4 ist einstückig hergestellt und der Stirnseite 7 der Rotorwelle 1 zugeordnet. Das Ringelement 4 ist in geeigneter Weise mit der Stirnseite 7 der Rotorwelle 1 verbunden, wobei eine geeignete Verbindungsart in Figur 3 dargestellt ist. In Figur 3 ist das Ringelement 4 beispielsweise auf einen Rotorwellenzapfen 8 aufgeschrumpft. Natürlich kann das Ringelement 4 aber auch mit der Stirnseite 7 verschraubt sein, wobei auch andere geeignete Verbindungen zur drehsicheren Verbindung, beispielsweise eine Klebverbindung vorgesehen sein können.

In dem Ringelement 4 sind in Umfangsrichtung 9 des Ringelementes 4 gesehen mehrere zueinander beabstandete Hohlräume 3 eingebracht, die in dem in Figur 1 dargestellten Ausführungsbeispiel als kreisrunde Bohrungen 11 ausgeführt sind. Natürlich sind die Bohrungen bzw. Hohlräume 3 stirnseitig verschlossen.

Bei dem in Figur 2 dargestellten Ausführungsbeispiel sind in dem Ringelement 4 kreisabschnittsartige Hohlräume 12 eingebracht.

Bei dem in Figur 3 dargestellten Ausführungsbeispiel ist in dem Ringelement 4 ein in Umfangsrichtung 9 gesehen durchgehender Hohlraum 13 eingebracht, so dass quasi ein Ringkanal gebildet ist. Der Hohlraum 13 nach dem Ausführungsbeispiel nach Figur 3 ist im Querschnitt gesehen L-förmig ausgeführt.

Bei dem in Figur 4 dargestellten Ausführungsbeispiel weist das Ringelement 4 ebenfalls einen in Umfangsrichtung 9 gesehen durchgängig angeordneten Hohlraum 14 auf, der im Querschnitt gesehen im Wesentlichen rechteckig ausgeführt ist.

Weiter ist der Figur 4 zu entnehmen, dass im Bereich der Stirnseite 7 der Rotorwelle 1 ein weiterer Hohlraum 16 mit im Querschnitt gesehen kreisrunder Ausgestaltung eingebracht ist. Gestrichelt ist in Figur 4 ein weiterer Hohlraum 17 dargestellt, der stirnseitig in die Rotorwelle 1 eingebracht und im Querschnitt gesehen bezogen auf eine Drehachse 18 der Rotorwelle 1 rechteckig ausgeführt ist.

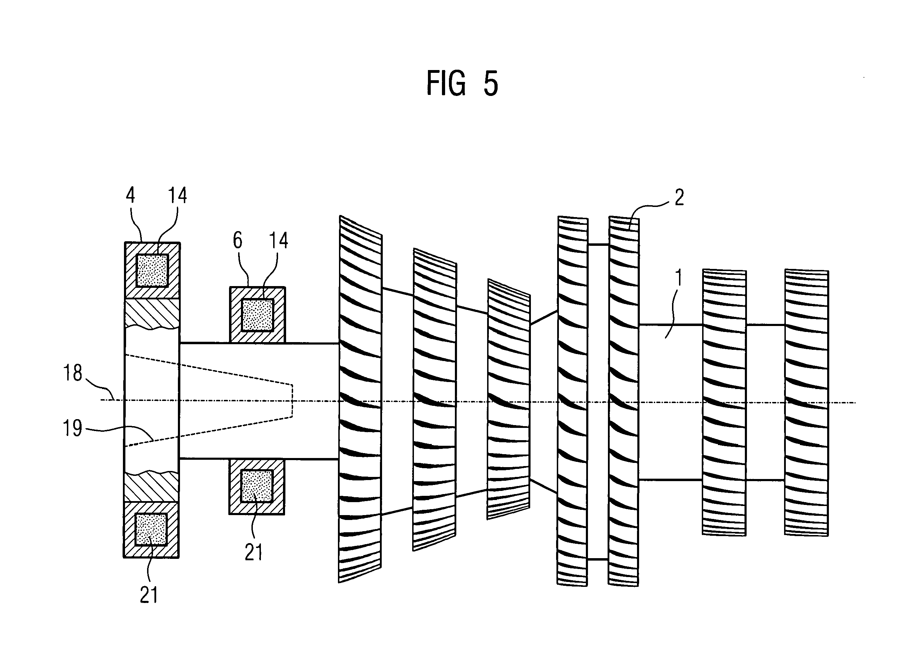

Der Figur 5 ist ein weiterer Hohlraum 19 dargestellt, der stirnseitig in die Rotorwelle 1 eingebracht und im Querschnitt gesehen bezogen auf die Drehachse 18 sich in Richtung zu der Drehachse 18 leicht verjüngend ausgeführt ist, so dass quasi ein konusförmiger Hohlraum 19 gebildet ist.

Das Ringelement 6 aus Figur 1 ist mehrstückig aus zwei zueinander korrespondierenden Halbschalen gebildet, die im montierten Zustand hinreichend dicht und fest miteinander verbunden sind. Das Ringelement 6 ist durch die mehrstückige Ausgestaltung einfach an einem beliebigen Ort auf der Mantelfläche der Rotorwelle 1 aufsetzbar und hier mit geeigneten Verbindungsmethoden hinreichend fest verbindbar. Als Verbindungsmethode könnte beispielsweise ein Schrumpfsitz vorgesehen sein. Möglich ist selbstverständlich auch eine Klebverbindung, sowie andere geeignete Verbindungsarten.

In dem Ringelement 6 ist ebenfalls zumindest ein Hohlraum angeordnet, der in den unterschiedlichen Ausgestaltungen nach den Figuren 1 bis 4 bezüglich des Ringelementes 4 ausgeführt sein kann, wobei die Ausgestaltungen der Hohlräume in dem Ringelement 4 natürlich nicht auf die dargestellten Ausführungen beschränkt ist. Denkbar ist als Hohlraum jede geeignete geometrische Ausführung.

Der jeweilige Hohlraum 3; 11, 12, 13, 14, 16, 17, 19 ist mit einem Medium 21 ganz oder teilweise befüllbar, welches bevorzugt eine breiige Konsistenz aufweist. Als Medium 21 kann beispielsweise ein Feststoff-Flüssigkeits-Gemisch verwendet werden, wobei als Feststoff bevorzugt Quarzsand und als Flüssigkeit bevorzugt Öl verwendet wird. Natürlich kann jeder geeigneter Feststoff und jede geeignete Flüssigkeit zur Bildung des Mediums 21 mit breiiger Konsistenz verwendet werden.

Bevorzugterweise wird als Feststoff aber Quarzsand mit einer Korngröße in einem Bereich zwischen 0,05 bis 0,5 mm verwendet, wobei hier insbesondere gebrochenes bzw. abgerundetes Korn verwendet wird. Durch Zuführen von Nanopartikeln in das Öl-Quarzsandgemisch wird das Dämpfungsverhalten zusätzlich verbessert. Die Nanopartikel bestehen aus einem Gemisch aus Graphit, Teflon und/oder Silizium und weisen eine Partikelgröße von ca. 0,04µm auf.

Bei dem in Figur 6 dargestellten Ausführungsbeispiel ist ein Querschnitt durch die Rotorwelle 1 als Bestandteil eines Hochdruckteils der Strömungsmaschine dargestellt. In der Rotorwelle 1 sind jeweils stirnseitig Hohlräume 22 eingebracht, welche mit dem Medium 21 breiiger Konsistenz gefüllt sind. In der in Zeichnungsebene linken Stirnseite 7 der Rotorwelle 1 sind zwei bezogen auf die Drehachse 18 der Rotorwelle 1 beabstandete Hohlräume angeordnet bzw. eingebracht, welche in dem dargestellten Ausführungsbeispiel in Umfangsrichtung 9 gesehen durchgängig in die Stirnseite 7 eingebracht sind. In der in der Zeichnungsebene rechten Stirnseite 7 dagegen ist lediglich ein Hohlraum 23 eingebracht, der analog zur Ausgestaltung der linken Seite ausgeführt ist.
Weiter ist sowohl der linken als auch der rechten Stirnseite jeweils ein Ringelement 4 in der Ausgestaltung nach Figur 1 mit einem Ringkanal gemäß Figur 4 zugeordnet.

Deutlich entnehmbar der Figur 6 ist, dass die vorgesehenen Hohlräume in thermisch günstigen Bereichen der Rotorwelle 1 als Bestandteil eines Hochdruckteils der Strömungsmaschine angeordnet sind. Hierbei liegt der Erfindung die Erkenntnis zugrunde, dass der in einem Einströmbereich einströmende Dampf eine höhere Temperatur aufweist als der aus dem Ausströmbereich bzw. im Stirnseitenbereich der Rotorwelle 1 ausströmende Dampf. Damit wird vorteilhaft dem Problem entgegengetreten, dass aus der Flüssigkeit des Mediums 21 gasförmige Bestandteile durch die relativ hohe thermische Einwirkung des Dampfes insbesondere im Einströmbereich entweichen.

In Figur 7 ist die Rotorwelle 1 als Bestandteil eines Niederdruckteils der Strömungsmaschine dargestellt, wobei in einem Niederdruckteil der Strömungsmaschine nicht so hohe Temperaturen herrschen wie im Hochdruckteil, so dass es möglich ist, einen einzigen Hohlraum 24 in die Rotorwelle 1 einzubringen, welcher sich durchgängig durch die Rotorwelle 1 hindurch erstreckt. Bei dem in Figur 7 dargestellten Ausführungsbeispiel weist der eingebrachte Hohlraum 24 ausgehend von der auf der Zeichnungsebene rechten Stirnseite zur linken Stirnseite hin einen leicht konischen Verlauf auf, so dass sich der Hohlraum von der rechten Stirnseite zur linken Stirnseite hin leicht vergrößert.

Natürlich sind auch die in ihrer geometrischen Ausgestaltung beispielhaft dargestellten Hohlräume 22, 23, und 24 ganz oder teilweise mit dem Medium 21 befüllbar.

## Patentansprüche

1. Strömungsmaschine,
die eine Rotorwelle (1) aufweist,
welche Rotorblätter (2) trägt,
**dadurch gekennzeichnet, dass**
der Rotorwelle (1) zumindest ein mit einem Medium (21) befüllbarer Hohlraum (3; 11, 12, 13, 14, 16, 17, 18, 19, 22, 23, 24) derart zugeordnet ist, dass Unwuchten der Rotorwelle (1) in ihrem Drehbetrieb reduziert sind.

2. Strömungsmaschine nach Anspruch 1,
**dadurch gekennzeichnet, dass**
der zumindest eine Hohlraum (3; 22, 23, 24) stirnseitig in die Rotorwelle (1) eingebracht ist.

3. Strömungsmaschine nach Anspruch 1 oder 2,
**dadurch gekennzeichnet, dass**
der zumindest eine Hohlraum (3; 11, 12, 13, 14, 16, 17, 18, 19, 22, 23, 24) in einem thermisch günstigen Bereich der Rotorwelle (1) angeordnet ist.

4. Strömungsmaschine nach einem der vorhergehenden Ansprüche,
**dadurch gekennzeichnet, dass**
der zumindest eine Hohlraum (24) in Axialrichtung der Rotorwelle (1) gesehen durchgängig in diese eingebracht ist.

5. Strömungsmaschine nach einem der vorhergehenden Ansprüche,
**dadurch gekennzeichnet, dass**
der zumindest eine Hohlraum (3; 16, 17, 18, 19, 22, 23, 24) in Umfangsrichtung der Rotorwelle (1) gesehen durchgängig in diese eingebracht ist.

6. Strömungsmaschine nach einem der vorhergehenden Ansprüche,
**dadurch gekennzeichnet, dass**
der zumindest eine Hohlraum (3; 11, 12, 13, 14) in einer mit der Welle verbindbaren Komponente (4, 6) eingebracht ist.

7. Strömungsmaschine nach Anspruch 6,
**dadurch gekennzeichnet, dass**
die Komponente (4,6) als Ringelement (4, 6) ausgeführt ist.

8. Strömungsmaschine nach Anspruch 6 oder 7,
**dadurch gekennzeichnet, dass**
die Komponente (6) mehrstückig aus Schalenelementen (17) gebildet ist.

9. Strömungsmaschine nach Anspruch 6 bis 8,
**dadurch gekennzeichnet, dass**
dass die Komponente (4, 6) als Hohlraum (3; 13, 14) einen Ringkanal aufweist.

10. Strömungsmaschine nach einem der Ansprüche 6 bis 9,
**dadurch gekennzeichnet, dass**
die Komponente (4, 6) mehrere in ihrer Umfangsrichtung (9) gesehen beabstandete Hohlräume (3; 11, 12) aufweist.

11. Strömungsmaschine nach einem der vorhergehenden Ansprüche,
**dadurch gekennzeichnet, dass**
das Medium (21) von breiiger Konsistenz ist.

12. Strömungsmaschine nach einem der vorhergehenden Ansprüche,
**dadurch gekennzeichnet, dass**
das Medium (21) ein Gemisch aus Quarzsand und Öl ist.

13. Strömungsmaschine nach Anspruch 12,
**dadurch gekennzeichnet, dass**
der Quarzsand eine Korngröße in einem Bereich zwischen 0,05 und 0,5 mm aufweist.
